# EUROPÄISCHE PATENTSCHRIFT

(11) **EP 0 935 059 B1**
(45) Veröffentlichungstag und Bekanntmachung des Hinweises auf die Patenterteilung: **25.02.2004**
(21) Anmeldenummer: 98120462.1
(22) Anmeldetag: 29.10.1998
(51) Int. Cl.: F02B 39/00, F02B 29/04

(54) **Vorrichtung zum Betrieb einer aufgeladenen Brennkraftmaschine**
Device for operating a supercharged internal combustion engine
Dispositif pour l'opération d'un moteur à combustion interne suralimenté

(30) Priorität: 07.02.1998 DE 19804950
(43) Veröffentlichungstag der Anmeldung: 11.08.1999
(73) Patentinhaber: Caterpillar Motoren GmbH & Co. KG, 24159 Kiel (DE)
(72) Erfinder: Aeffner, Kurt, 24116 Kiel (DE)
(74) Vertreter: Hansmann, Dierk, Dipl.-Ing.

(56) Entgegenhaltungen:
- DE-A- 2 814 593
- DE-A- 3 421 355
- FR-A- 2 502 692
- GB-A- 1 484 524

## Beschreibung

Die Erfindung bezieht sich auf eine Vorrichtung für eine aufgeladene Brennkraftmaschine mit einer Abgasturbine, einem Verdichter und einem Ladeluftkühler sowie einer Anordnung zur Kondenswasserabscheidung, wobei das Kondenswasser vom Gehäuse des Ladeluftkühlers über eine Leitungsverbindung selbsttätig gefördert und im Abgasstrom verdampft wird.

Brennkraftmaschinen größerer Leistung, insbesondere für Dieselmotore als Schiffsantriebe und stationäre Anlagen, die bei Vollast Ladeluftdrück > 4 bar (abs.) erreichen, können nicht immer mit Ladelufttemperaturen oberhalb des Taupunktes der Ladeluft betrieben werden. Bei Tropenbedingungen fällt im Ladeluftkühler Kondenswasser an, das im Motor zu Korrosion führen kann. Die Taupunkttemperaturen bewegen sich bei diesen Ladedrücken deutlich über 60 Grad C. Damit jeglicher Kondenswasseranfall vermieden wird, müßten hierbei Ladelufttemperaturen zwischen 65 und 70 Grad C gefahren werden. Hierbei besteht das Problem, daß die Motoren bei Vollast im Tropenbetrieb unter Berücksichtigung dieser Ladelufttemperaturen thermisch überlastet werden.

Es ist bekannt, das anfallende Kondenswasser aus dem Ladeluftkanal abzuleiten, indem über Öffnungen ständig ein Luft-/wassergemisch abgeblasen wird. wenn nur Wasser austritt, sind die Ablaufstutzen überflutet und die Sonde für wassererkennung löst einen Alarm aus. Damit alarmfrei gefahren wird, ist es erforderlich, in Kombination die Ladelufttemperatur maßvoll anzuheben und/oder die Leistung zu vermindern.

Ein ständiges Abblasen der Ladeluft in einen Maschinenraum kann auch durch die Anordnung von sogenannten Kondensomaten vermieden werden. Messungen haben aber gezeigt, daß nur ein geringer Teil (ca. 20 %) des anfallenden Kondenswassers über die Öffnungen im Ladeluftkanal abgeführt werden. Die geringe Tröpfchengröße des Kondensats (Nebelbildung) sowie die Strömungsgeschwindigkeit der Ladeluft halten große Mengen des Kondenswassers in der Schwebe, so daß es mit der verbrennungsluft in die Brennräume gelangen kann.

Bei einer Anordnung eines Wasserabscheiders direkt am Luftaustritt des Ladekühlers werden große Mengen des Kondenswassers gesammelt und abgeleitet. Der Abscheidegrad sollte mindestens 80 % betragen. Die Kondenswassermenge kann im Tropenbetrieb (Ansaugluftparameter: Temperatur 45 Grad/relative Feuchte 50 Grad) bis zu 50 ml/Kw h betragen. Diese auftretenden großen Mengen von Kondenswasser kann selbst bei Schiffsantrieben nicht mehr einfach in die Bilge abgeleitet werden, da die zur Bilgenentleerung vorgeschriebenen Bilgenwasser-Entöler nur für wesentlich kleinere Mengen ausgelegt sind. Die andere Möglichkeit das anfallende Kondensat in einem Sammelbehälter aufzufangen und nach außenbords abzupumpen ist relativ aufwendig und teuer.

Nach der DE-A-2646490 ist bereits eine aufgeladene Brennkraftmaschine bekanntgeworden, wobei der Ladeluftkühler mit einer Sprühvorrichtung zur Reinigung seiner von der Ladeluft bestrichenen Oberfläche mit einer Spülflüssigkeit versehen ist. Dabei ist dem Ladeluftkühler ein Flüssigkeitsabscheider für die Spülflüssigkeit nachgeschaltet, der mit einer Abflußleitung versehen ist. Diese Abflußleitung besitzt eine Drossel zur Begrenzung der Luftströmung in dieser Leitung.

Ferner ist die DE-A-2814593 eine Anordnung bekannt geworden, die eine Kondensatabführung selbsttätig durchführt und dabei das abgeführte Kondensat in Strömungsrichtung vor der Abgasturbine in die Abgasleitung der Brennkraftmaschine einführt und einen Reinigungseffekt an der Turbine durch den Wasserdampf einstellbar ist. Bei dieser Anordnung ist lediglich ein geringes Druckgefälle vorhanden, das für Betriebsbedingungen bei hoher relativer Luftfeuchtigkeit keine ausreichende Kondensatabführung gewährleistet.

Die Aufgabe der Erfindung besteht darin, ein Verfahren und eine Vorrichtung zur Kondenswasserabscheidung bei einer aufgeladenen Brennkraftmaschine in großen Mengen zu schaffen, wobei das anfallende Kondenswasser in einfacher Weise entsorgbar ist und ohne aufwendige Baumaßnahmen am Motor eine Entsorgung ermöglicht wird.

Diese Aufgabe wird erfindungsgemäß durch die Merkmale des kennzeichnenden Teils des Anspruches 1 gelöst.

Weitere vorteilhafte Ausbindungen sind durch die Merkmale der Unteransprüche gekennzeichnet.

Die mit der Erfindung hauptsächlich erzielten Vorteile bestehen darin, daß durch die Einführung des anfallenden Kondenswassers in die Abgasleitung, insbesondere in Strömungsrichtung nach der Abgasturbine eine rückstandsfreie Entsorgung des Kondenswassers ohne zusätzliche Energiezuführung gewährleistet ist.

Der Anschluß der Rohrleitungen am Gehäuse des Ladeluftkühlers sowie an der Abgasleitung wird motorintern verrohrt. Hierdurch ist der Bauaufwand sehr gering.

Vorteilhaft ist auch, daß durch die Einbringung des Kondenswassers in Strömungsrichtung nach der Turbine, das Kondenswasser aufgrund der Druckdifferenz zwischen Ladeluft und Abgas, ohne Hilfsmittel in den Abgasstrom gefördert werden kann und in diesem verdampft.

Damit die Ladeluft-Abblasemenge vernachlässigbar klein bleibt, ist in den Rohrleitungen eine Blendenanordnung vorgesehen.

Bei der Einspeisung des Kondenswassers in den Abgasstrom entsteht bei jeder Laststufe eine effektive Verdampfung, da nur bei höheren Ladedrücken Kondenswasser anfällt und dann auch der Abgas-Massenstrom und die Abgastemperatur entsprechend groß sind, wodurch sich ein idealer Selbstregeleffekt ergibt. Die Verdampfung des Kondenswassers wird auch außerordentlich durch den Umstand begünstigt, daß keine voller Wasserstrahl in die Abgasleitung gelangen kann, sondern durch den Ladedruck nur ein Luft-Wasser-Gemisch eingesprüht wird.

Durch die Einspeisung des Kondenswassers in die Abgasleitung wird ein Ladeluft-Temperaturregelung, die eine Taupunktüberschreitung ermöglicht, überflüssig und kann unter der Voraussetzung entfallen, daß die niedrige Ladelufttemperatur bei Teillast (ca. 25 Grad bis 40 Grad) nicht schädlich für den Motor sind.

Ein Ausführungsbeispiel der Erfindung ist in der Zeichnung schematisch dargestellt. Es zeigen:

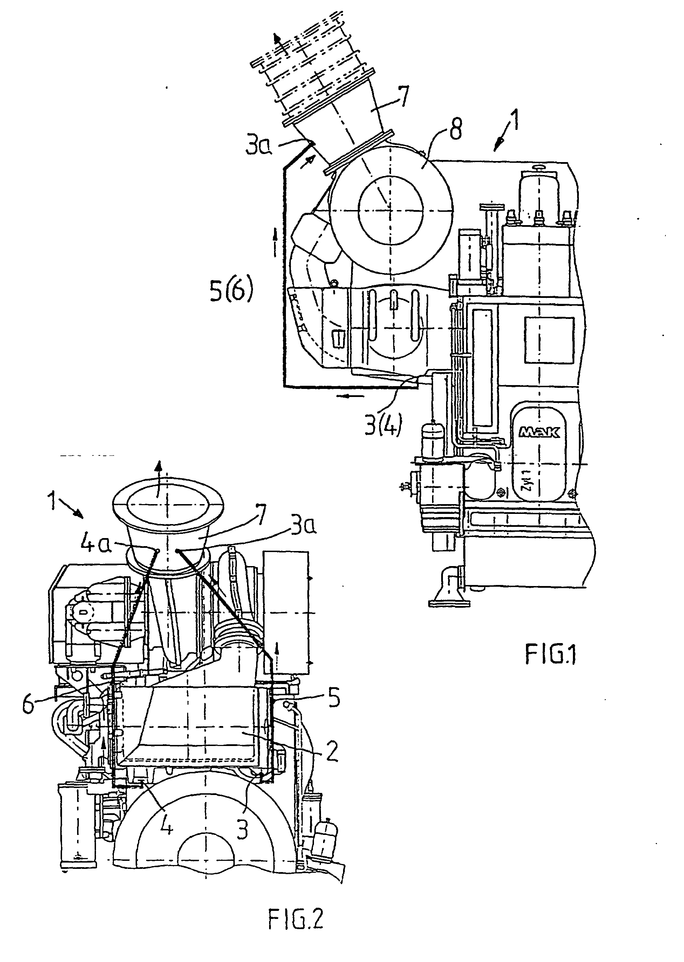

- Fig. 1: eine Seitenansicht eines Teils einer Brennkraftmaschine mit Rohrleitungen für Kondenswasser und
- Fig. 2: eine Seitenansicht gemäß Fig. 2 in um 90 Grad gedrehter Lage.

Die gezeigte Brennkraftmaschine 1 besitzt einen Abgasturbolader mit einer Abgasturbine und einem Verdichter sowie einem Ladeluftkühler 2.

An einem Gehäuse des Ladeluftkühlers 2 sind bodenseitig Abläufe 3,4 angeordnet, die mit Rohrleitungen 5,6 verbunden sind. Diese sind zu einem Abgasübergangsstück 7 einer Abgasleitung geführt und münden über Einlässe 3a,4a in dieses Abgasübergangsstück 7. Die Einlässe 3a,4a sind voneinander getrennt, so daß die Einleitung des Kondenswassers in das Übergangsstück 7 über zwei Bereiche erfolgt.

Die Rohrleitungen 5,6 sind um das Gehäuse des Ladeluftkühlers 2 herumgeführt und werden der Abgasleitung mit seinem Übergangsstück 7 über einen schrägverlaufenden Abschnitt zugeführt. Die Rohrleitungen 5,6 treten vorzugsweise benachbart zur Turbine 8 in das Übergangsstück 7 der Abgasleitung ein. Dieses ermöglicht eine optimale Verdampfung des zugeführten Kondenswassers.

Die Ladeluft-Abblasemenge kann durch eine nicht näher dargestellte Blendenanordnung an den Rohrleitungen 5,6 minimiert werden, so daß sie vernachlässigbar klein ist.

Bei einem Betrieb der Brennkraftmaschine 1 sammelt sich im Gehäuse des Ladeluftkühlers 2 Kondenswasser an. Dies wird in den Rohrleitungen 5,6 in Pfeilrichtung in das Übergangsstück 7 der Abgasleitung gefördert. Dieses erfolgt aufgrund der Druckdifferenz zwischen dem Ladeluftkühler 2 und der Abgasleitung selbsttätig. Im Übergangsstück 7 erfolgt dann eine Verdampfung des Kondensats im Abgasstrom.

## Patentansprüche

1. Vorrichtung für eine aufgeladene Brennkraftmaschine (1) mit einer Abgasturbine, einem Verdichter und einem Ladeluftkühler (2) sowie einer Anordnung zur Kondenswasserabscheidung, wobei das Kondenswasser vom Gehäuse des Ladeluftkühlers über eine Leitungsverbindung selbsttätig gefördert und im Abgasstrom verdampft wird, **dadurch gekennzeichnet, daß** die Anordnung zur Kondenswasserabscheidung über eine kondenswasserführende Leitungsverbindung (5,6) an die Abgasleitung (7) der Brennkraftmaschine (1) in Strömungsrichtung nach der Abgasturbine (8) an die Abgasleitung (7) der Brennkraftmaschine (1) angeschlossen ist.

2. Vorrichtung nach Anspruch 1, **dadurch gekennzeichnet, daß** im Boden des Gehäuses des Ladeluftkühlers (2) an mindestens zwei Seiten Abläufe (3,4) mit angeschlossenen Rohrleitungen (5,6) angeordnet und diese Rohrleitungen (5,6) in ein Übergangsstück (7) der Abgasleitung in Einlässe (3a,4a) einmünden.

3. Vorrichtung nach Anspruch 1 oder 2, **dadurch gekennzeichnet, daß** die Einlässe (3a,4a) der Rohrleitungen (5,6) getrennt in das Übergangsstück (7) der Abgasleitung einmünden.

4. Vorrichtung nach einem der Ansprüche 1 bis 3, **dadurch gekennzeichnet, daß** die Rohrleitungen (5,6) Blendenanordnungen für eine Bemessung der Ladeluft-Abblasmenge aufweisen.

5. Vorrichtung nach einem der Ansprüche 1 bis 4, **dadurch gekennzeichnet, daß** die Rohrleitungen (5,6) benachbart der Abgasturbine (8) in das Übergangsstück (7) der Abgasleitung einmünden.

## Claims

1. Apparatus for a supercharged internal combustion engine (1) comprising an exhaust gas turbine, a compressor and an intercooler (2) as well as an arrangement for separating condensation water, wherein the condensation water is automatically fed from the housing of the intercooler through a line connection and evaporated in the exhaust gas flow, **characterized in that** the arrangement for separating condensation water is connected by a condensation-water-carrying line connection (5, 6) to the exhaust passage (7) of the internal combustion engine (1) downstream of the exhaust gas turbine (8) to the exhaust passage (7) of the internal combustion engine (1).

2. Apparatus according to claim 1, **characterized in that** outlets (3, 4) with connected pipes (5, 6) are disposed in the bottom of the housing of the intercooler (2) on at least two sides and said pipes (5, 6) open into inlets (3a, 4a) into a transition piece (7) of the exhaust passage.

3. Apparatus according to claim 1 or 2, **characterized in that** the inlets (3a, 4a) of the pipes (5, 6) open separately into the transition piece (7) of the exhaust passage.

4. Apparatus according to one of claims 1 to 3, **characterized in that** the pipes (5, 6) have orifice arrangements for dimensioning of the charged-air blowoff quantity.

5. Apparatus according to one of claims 1 to 4, **characterized in that** the pipes (5, 6) open adjacent to the exhaust gas turbine (8) into the transition piece (7) of the exhaust passage.

## Revendications

1. Dispositif pour moteur à combustion interne suralimenté (1) avec une turbine à gaz d'échappement, un compresseur, un refroidisseur d'air (2) et un dispositif de séparation de l'eau de condensation, l'eau de condensation étant acheminée automatiquement à partir du boîtier du refroidisseur d'air, par l'intermédiaire d'une jonction de circuits puis étant évaporée dans le flux des gaz d'échappement, et **caractérisé en ce que** le dispositif de séparation de l'eau de condensation a été raccordé via une jonction de circuits (5,6) à la conduite de gaz d'échappement (7) du moteur à combustion interne (1), dans le sens d'écoulement, derrière la turbine de gaz d'échappement.

2. Dispositif selon la revendication 1, **caractérisé en ce que** des écoulements à canalisations tubulaires ont été raccordés sur au moins deux côtés, dans le fond du boîtier du refroidisseur d'air (2) et **en ce que** ces canalisations tubulaires (5,6) débouche, dans un élément de transition (7) de la conduite de gaz d'échappement, dans des arrivées (3a, 4a).

3. Dispositif selon la revendication 1 ou 2, **caractérisé en ce que** les arrivées (3a, 4a) des canalisations tubulaires débouchent séparément dans l'élément de transition (7) de la conduite de gaz d'échappement.

4. Dispositif selon une des revendications 1 à 3, **caractérisé en ce que** les canalisations tubulaires (5, 6) présentent des systèmes de diaphragme pour le calcul de la quantité d'air soufflé.

5. Dispositif selon une des revendications 1 à 4,
**caractérisé en ce que** les canalisations tubulaires (5,6) débouchent, près de la turbine de gaz d'échappement (8), dans l'élément de transition (7) de la conduite de gaz d'échappement.
